# FASCICULE DE BREVET EUROPEEN

(11) **EP 0 695 848 B1**
(45) Date de publication et mention de la délivrance du brevet: **02.04.2003**
(21) Numéro de dépôt: 95401714.1
(22) Date de dépôt: 19.07.1995
(51) Int. Cl.: E04C 2/54, E06B 3/54, B60J 1/18

(54) **Elément de construction constitué d'un vitrage et d'un longeron ou d'une armature collés sur le vitrage**
Aus einer Verglasung und einem Längsträger oder einem auf der Verglasung aufgeklebten Beschlag bestehendes Konstruktionselement
Construction element consisting of a glazing and a girder or an armature glued to the glazing

(30) Priorité: 03.08.1994 DE 4427402
(43) Date de publication de la demande: 07.02.1996
(73) Titulaire: SAINT-GOBAIN GLASS FRANCE, 92400 Courbevoie (FR)
(72) Inventeur: Nissl, Thomas, D-36124 Eichenzell (DE); Timmermann, Alwin, D-50933 Koln (DE)
(74) Mandataire: Muller, René

(56) Documents cités:
- DE-U- 1 819 525

## Description

La présente invention concerne un élément de construction comprenant au moins un vitrage (ou « vitre ») et au moins un longeron collé sur le vitrage, le longeron faisant éventuellement partie d'un cadre .

On connait déjà des éléments de constucton de serre notamment, constitués de plaque(s) de résine polyester renforcée par des fibres de verre et d'un profilé porteur en métal qui comprend une âme et des ailes. L'âme du profilé a une section ouverte formée d'une base et de deux côtés repliés vers l'intérieur (voir DE-U-1 819 525).

Dans la présente invention, on entend par « éléments de construction » les éléments tels que mentionnés précédemment, qui trouvent leur application aussi bien dans le bâtiment que dans la construction automobile et la fabrication d'appareils industriels ou ménagers. Dans le domaine du bâtiment, il peut s'agir par exemple d'éléments de façade, de bardage, de panneaux préfabriqués, de fenêtres ou de portes. Dans la construction automobile, il peut aussi s'agir de fenêtres ou de portes, ou encore de hayons, de toits ouvrants, etc... De même, dans la fabrication des appareils industriels ou ménagers, ces éléments peuvent être utilisés dans la construction de fenêtres, de portes, etc...

Dans les éléments de construction, le longeron fait en général partie d'un cadre collé à la vitre sur tout son pourtour. Le longeron peut également faire partie d'un cadre présentant une ou plusieurs discontinuités ou peut présenter une longueur plus faible que le côté du vitrage sur lequel il est collé.

Pour certaines applications, il est important que les éléments de construction présentent une bonne rigidité en torsion. Pour cette raison, le longeron ou le cadre comprenant le longeron doivent répondre à certaines exigences. Lorsque pour des raisons de poids ou de coût le longeron collé à la glace est constitué d'un profilé en tôle et que l'épaisseur de la tôle est relativement faible, comme on peut d'habitude le constater en construction automobile, la stabilité et la rigidité en torsion requises sont obtenues en utilisant des profilés dits « en caisson » fermés, c'est-à-dire des profilés creux de section fermée. La fabrication de ces profilés ou longerons en caisson fermés est cependant relativement coûteuse.

L'objet de l'invention est de concevoir un élément de construction présentant un poids inférieur à celui des éléments de construction connus, sans aucun préjudice pour la rigidité en torsion de l'élément.

L'élément de construction selon l'invention comprend au moins un vitrage et au moins un longeron faisant éventuellement partie d'un cadre et se caractérise en ce que le longeron est constitué d'un profilé comprenant une âme et des ailes Formant une base ouverte de section approximativement en U et, en ce que les ailes sont repliées en leur extrémité libre de façon à former des rebords pour le collage du vitrage et du longeron. De cette manière, la base en U du profilé et la surface du vitrage situé entre les rebords forment un ensemble rigide et solide de section fermée, substantiellement trapézoïdale, la grande base du trapège étant formée par le vitrage. Le collage se fait au moyen d'une couche de colle rigide et l'ensemble formé par le profilé et le vitrage entre les rebords de collage du longeron présente une section fermée et est rigide en torsion.

Un longeron en tôle mince à section ouverte, notamment à section approximativement en U, est non seulement plus léger en poids qu'un longeron-caisson fermé, mais il est en outre plus facile et moins cher à fabriquer qu'un longeron constitué d'un profilé en caisson. Par ailleurs, afin d'obtenir une rigidité en torsion élevée pour un profilé en caisson, les jonctions des tôles doivent être effectuées par agrafage ou soudure ; cet assemblage est effectué plus simplement dans la solution selon l'invention par le collage rigide des extrémités des ailes du profilé sur la vitre. Celle-ci présente par elle-même une grande rigidité et une épaisseur de paroi bien plus élevée que la tôle du longeron. Par conséquent, un collage rigide approprié des ailes sur la vitre permet de réaliser une structure de type profilé en caisson à partir d'un longeron de section ouverte, cette structure se caractérisant par une rigidité en torsion au moins égale et même supérieure à celle d'un longeron de section fermée en raison des caractéristiques mécaniques particulières de résistance de la vitre.

L'élément de construction selon l'invention peut être obtenu, par exemple, à partir de longerons dont les ailes sont recourbées vers l'intérieur, c'est-à-dire courbées l'une vers l'autre. Mais il est particulièrement avantageux de recourber les ailes vers l'extérieur. Dans ce cas, une partie beaucoup plus large de la vitre ferme le profilé pour former une structure en caisson, ce qui entraîne un accroissement exceptionnel de la rigidité en torsion de l'élément.

Bien entendu, une importance particulière doit être accordée aux caractéristiques physiques des couches de colle. Des colles appropriées à cet emploi sont cependant commercialisées, de sorte que l'on peut choisir sans difficulté parmi les colles disponibles celles dont les propriétés remplissent le mieux les conditions d'utilisation selon l'invention. Dans la présente invention, il faut surtout prendre en considération les colles qui présentent une dureté Shore relativement élevée à l'état durcies, de préférence une dureté shore A supérieure à 50, et qui possèdent une déformabilité élastique et plastique peu élevée. Lors du choix d'une colle adéquate, il faut tenir compte du fait que les couches de colle doivent présenter une épaisseur minimale, en général une épaisseur supérieure ou égale à 3-4 mm, par suite des tolérances de forme inévitables des vitres. Les couches de colle doivent donc, pour cette épaisseur relativement importante, remplir les conditions voulues de résistance à la déformation et de rigidité mécaniques. D'autre part, ces couches doivent, en fonction des dimensions de la surface de la vitre, pouvoir supporter ou absorber les contraintes mécaniques qui apparaissent en raison de la dilatation thermique différentielle, en général inévitable, de la vitre et de l'armature métallique. Le cas échéant, des essais appropriés permettent de sélectionner la colle convenant à une utilisation spécifique.

Comme il a déjà été mentionné, l'invention peut être utilisée pour les applications les plus variées, à la fois dans la construction automobile, le bâtiment et la fabrication d'appareils.

Un exemple de réalisation sera décrit ci-après au moyen des dessins représentant le hayon d'un véhicule, dont la conception est conforme à l'invention.

Parmi les dessins :
- la figure 1 est une vue d'ensemble du hayon d'un véhicule réalisé selon l'invention ;
- la figure 2 est une coupe selon la ligne II-II de la figure 1 ;
- la figure 3 est une coupe selon la ligne III-III de la figure 1 ;
- la figure 4 est une coupe selon la ligne IV-IV de la figure 1.

Le hayon 1 se compose pour ses éléments essentiels d'un cadre 2 formé par emboutissage à partir d'une tôle relativement mince, et d'un vitrage en verre 3 d'environ 6 mm d'épaisseur constitué d'un verre trempé thermiquement. Le vitrage 3 peut bien entendu être muni d'éléments connus, par exemple de résistances chauffantes et/ou de conducteurs pour antenne, qui ne sont cependant pas représentés pour la clarté du dessin. De même, les éléments qui sont normalement fixés au cadre du hayon, comme les charnières, le dispositif de verrouillage, entre autres, ne sont pas représentés car ils ne sont pas indispensables à la représentation de l'invention.

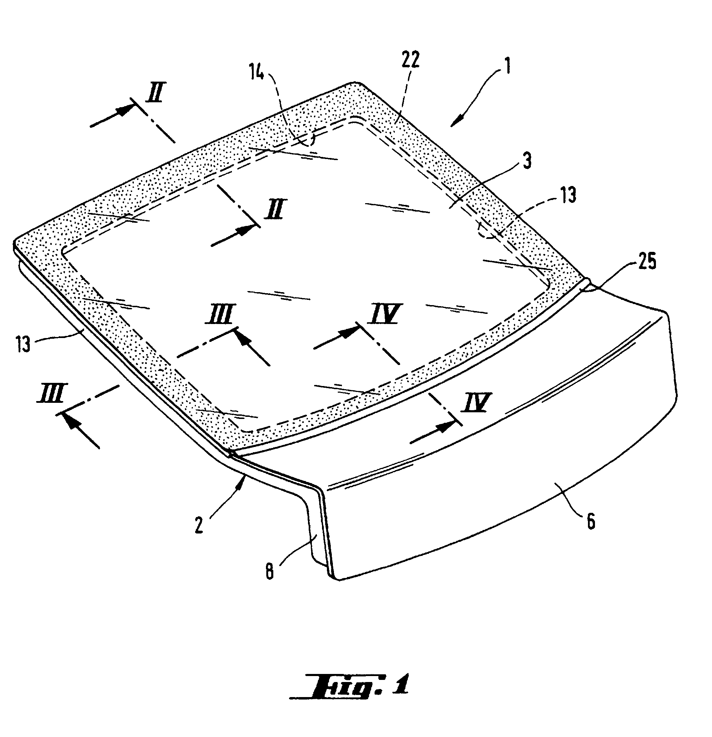

Comme le montre en particulier la figure 1, le vitrage 3 présente sur trois côtés les mêmes dimensions que celles du cadre métallique, pour l'exemple de réalisation choisi, de sorte que le vitrage 3 n'est pas encadré sur ces côtés, mais qu'elle s'étend sur toute la largeur du hayon, la partie du cadre soutenant le vitrage n'étant ainsi pas directement visible de l'extérieur une fois le hayon mis en place dans le véhicule. Des réalisations ayant un effet esthétique particulier par leur conception sont, par conséquent, possibles.

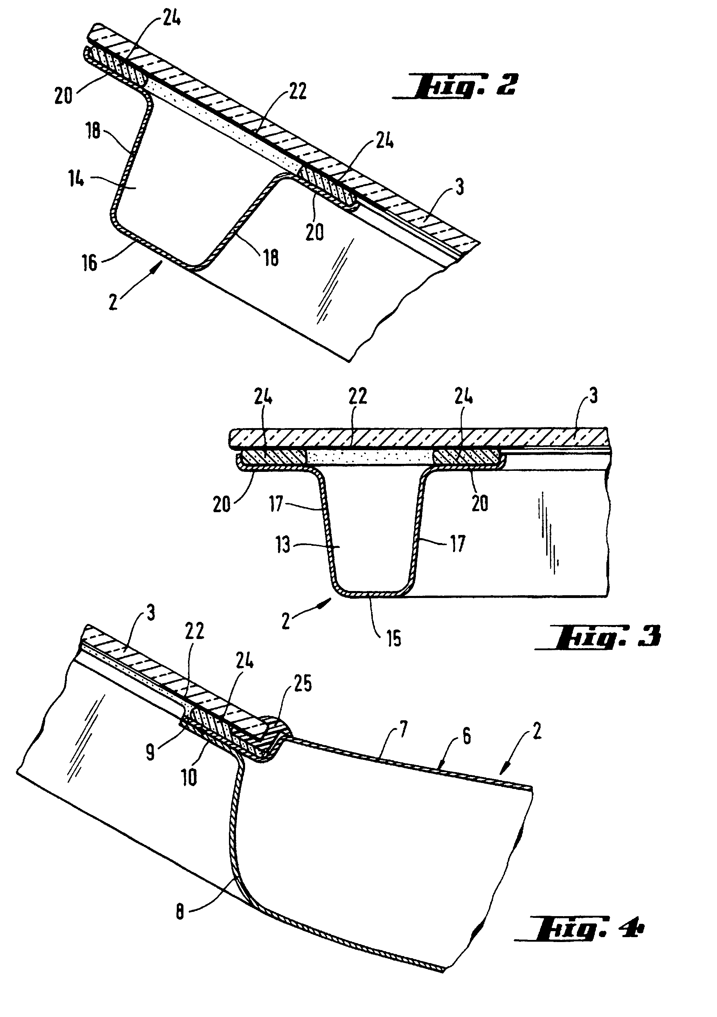

Les détails de structure du cadre 2 peuvent être observés dans les figures 2 à 4. La partie inférieure 6 du cadre 2 se compose classiquement de deux pièces de forme en tôle emboutie, soit une pièce de forme supérieure 7 et une pièce de forme inférieure 8, qui sont par exemple soudées ou agrafées entre elles. La partie terminale recourbée 9 de la pièce supérieure 7 forme un renfoncement et est soudée ou agrafée avec la partie terminale 10 de la pièce de forme inférieure 8 ; le collage de la vitre 3 est effectué dans le renfoncement. La partie inférieure 6 du cadre 2 possède une rigidité en torsion satisfaisante par suite de ses dimensions et de sa conception, de sorte que la configuration selon l'invention de l'élément de construction n'est pas indispensable dans ce segment.

Cependant, les autres parties du cadre 2, c'est-à-dire les deux longerons latéraux 13 et le longeron supérieur 14, se composent chacun d'un profilé de tôle courbé en U et ouvert vers le haut. La largeur des longerons 13 et 14, c'est-à-dire la largeur de la ceinture inférieure 15 ou 16, peut varier et remplir les exigences particulières formulées. Dans le cas présent, les longerons latéraux 13 de l'armature sont plus étroits que le longeron supérieur 14, mais d'autres dimensions sont bien entendu envisageables en fonction des exigences posées.

Les deux ailes 17 et 18 des longerons 13 et 14 sont respectivement recourbées vers l'extérieur. Leur partie terminale recourbée est approximativement parallèle au vitrage 3 et constitue de part et d'autre pour chacun des longerons deux rebords 20 pour le collage des longerons sur le vitrage 3.

Le vitrage 3 est muni d'un encadrement décoratif 22 sur son pourtour et sur sa face collée à l'élément de bordure 2. Ce type de décor disposé sur le pourtour des vitrages est courant et nécessaire afin de protéger la couche de colle sous-jacente des rayons U.V. et d'empêcher la vision du cadre et de la colle par transparence du vitrage.

La couche de colle 24 entre les rebords 20 des longerons 13, 14 et le vitrage 3 assure une liaison rigide entre la vitre et les longerons. Cette couche se compose d'un système de colle approprié qui durcit pour donner une couche de colle rigide ayant une résistance au cisaillement élevée et une très faible déformabilité élastique et plastique. En fonction du système de colle utilisé dans chaque cas particulier pour les besoins mentionnés, la couche de colle peut présenter une épaisseur plus ou moins grande. Par suite des tolérances de forme inévitables du cadre et du vitrage, l'épaisseur de cette couche est, de préférence, supérieure à 5 mm dans cet exemple de réalisation.

Comme représenté en figure 4, un joint est placé entre l'arête inférieure du vitrage 3 et la partie inférieure 6 du cadre. Ce joint consiste en une bande profilée 25, dont la base est ancrée dans la couche de colle 24.

Bien entendu, l'application de l'invention dans la fabrication du hayon ne représente que l'un des nombreux exemples d'utilisation. Ainsi, d'autres composants d'un véhicule peuvent être conçus selon l'invention, par exemple les toits ouvrants escamotables, pour lesquels une vitre en verre est collée sur un cadre à structure appropriée. L'invention peut même être exploitée avec succès pour des éléments de la carrosserie ou pour la carrosserie du véhicule dans son ensemble, lorsque celle-ci est équipée de vitres montées de manière fixe. Lorsque par exemple les longerons latéraux de la carrosserie sont configurés selon l'invention et sont liés à la vitre par une fixation rigide, la fabrication des éléments porteurs de la carrosserie peut être plus simple et moins coûteuse. En particulier, pour des vitres latérales à montage fixe, l'invention peut être utilisée avec succès.

## Revendications

1. Elément de construction comprenant au moins un vitrage (3) et au moins un longeron (13, 14), **caractérisé en ce que** le longeron (13, 14) est constitué d'un profilé comprenant une âme (16) et des ailes (17, 18) formant une base de section ouverte approximativement en U, et **en ce que** les ailes (17, 18) sont repliées vers l'extérieur en leur extrémité libre pour former des rebords (20) sur lesquels le vitrage (3) est collé, de sorte que la base en U du profilé et la surface du vitrage (3) entre les rebords (20) forment un ensemble rigide et solide de section fermé, substantiellement trapézoïdale, dont la grande base est formée par le vitrage (3).

2. Elément de construction selon la des revendication 1, **caractérisé en ce que** le vitrage (3) est constitué par un verre trempé thermiquement.

3. Elément de construction selon l'une des revendications 1 ou 2, **caractérisé en ce que** le longeron (13, 14) est collé sur une des faces du vitrage (3), à sa périphérie.

4. Elément de construction selon l'une des revendications 1 à 3, **caractérisé en ce que** le longeron (13, 14) fait partie d'un cadre (2).

5. Élément de construction selon l'une des revendications 1 à 4, **caractérisé en ce que** le vitrage (3) et le longeron (13, 14) ou le cadre (2) présentent au moins une dimension commune.

6. Élément de construction selon l'une des revendications 1 à 5, **caractérisé en ce que** le vitrage (3) et le longeron (13, 14) sont collés par l'intermédiaire d'une colle rigide.

7. Élément de construction selon l'une des revendications 1 à 8, **caractérisé en ce que** le vitrage (3) et le longeron (13, 14) sont collés par l'intermédiaire d'une colle présentant, après durcissement, une résistance élevée au cisaillement et une déformabilité élastique et plastique peu élevées.

## Claims

1. Construction element comprising at least one glazing pane (3) and at least one longitudinal member (13, 14), **characterised in that** the longitudinal member (13, 14) consists of a profiled member comprising a web (16) and flanges (17, 18) forming a base with an open section approximately in the shape of a U, and **in that** the flanges (17, 18) are bent outwards at their free end in order to form edges (20) to which the glazing pane (3) is bonded, so that the U-shaped base of the profiled member and the surface of the glazing (3) between the edges (20) form a rigid strong assembly with a closed, substantially trapezoidal cross-section, whose large base is formed by the glazing pane (3).

2. Construction element according to Claim 1, **characterised in that** the glazing pane (3) consists of a heat-toughened glass.

3. Construction element according to one of Claims 1 or 2, **characterised in that** the longitudinal member (13, 14) is bonded to one of the faces of the glazing pane (3) at its periphery.

4. Construction element according to one of Claims 1 to 3, **characterised in that** the longitudinal member (13, 14) forms part of a frame (2).

5. Construction element according to one of Claims 1 to 4, **characterised in that** the glazing pane (3) and the longitudinal member (13, 14) or the frame (2) have at least one common dimension.

6. Construction element according to one of Claims 1 to 5, **characterised in that** the glazing pane (3) and the longitudinal member (13, 14) are bonded by means of a rigid glue.

7. Construction element according to one of Claims 1 to 8, **characterised in that** the glazing pane (3) and the longitudinal member (13, 14) are bonded by means of a glue having, after hardening, high shear strength and low elastic and plastic deformability.

## Patentansprüche

1. Konstruktionselement aus mindestens einer Glasscheibe (3) und mindestens einem Holm (13, 14), **dadurch gekennzeichnet, dass** der Holm (13, 14) aus einem Profil gebildet ist, das einen Steg (16) und Schenkel (17, 18) umfasst und eine Basis von offenem, etwa u-förmigem Querschnitt bildet, und dadurch, dass die Schenkel (17, 18) an ihrem freien Ende nach außen hin umgebogen sind, um Flansche (20) zu bilden, auf welche die Glasscheibe (3) geklebt wird, derart dass die u-förmige Basis des Profils und die Oberfläche der Glasscheibe (3) zwischen den Flanschen (20) eine starre und feste Baugruppe mit geschlossenem, im wesentlichen trapezoïdalem Querschnitt bilden, dessen Flächenbasis von der Glasscheibe (3) gebildet ist.

2. Konstruktionselement nach Anspruch 1, **dadurch gekennzeichnet, dass** die Glasscheibe aus einem thermisch vorgespannten Glas hergestellt ist.

3. Konstruktionselement nach Anspruch 1 oder 2, **dadurch gekennzeichnet, dass** der Holm (13, 14) auf eine der Seiten der Glasscheibe (3) an deren Rand aufgeklebt ist.

4. Konstruktionselement nach einem der Ansprüche 1 bis 3, **dadurch gekennzeichnet, dass** der Holm (13, 14) als Teil eines Rahmens (2) ausgeführt ist.

5. Konstruktionselement nach einem der Ansprüche 1 bis 4, **dadurch gekennzeichnet, dass** die Glasscheibe (3) und der Holm (13, 14) oder der Rahmen (2) wenigstens eine gemeinsame Abmessung haben.

6. Konstruktionselement nach einem der Ansprüche 1 bis 5, **dadurch gekennzeichnet, dass** die Glasscheibe (3) und der Holm (13, 14) mithilfe eines steifen Klebers verklebt sind.

7. Konstruktionselement nach einem der Ansprüche 1 bis 6, **dadurch gekennzeichnet, dass** die Glasscheibe (3) und der Holm (13, 14) mithilfe eines Klebers verklebt sind, der nach dem Aushärten eine erhöhte Scherfestigkeit und ein geringes elastisches und plastisches Deformationsvermögen aufweist.
